# FASCICULE DE BREVET EUROPEEN

(11) **EP 3 314 133 B1**
(45) Date de publication et mention de la délivrance du brevet: **12.02.2020**
(21) Numéro de dépôt: 16736906.5
(22) Date de dépôt: 21.06.2016
(51) Int. Cl.: F16B 5/06, B60R 13/02, F16B 21/18

(54) **DISPOSITIF DE FIXATION A HAUTE RESISTANCE A L'ARRACHEMENT**
BEFESTIGUNGSVORRICHTUNG MIT HOHER AUSZIEHFESTIGKEIT
FASTENING DEVICE WITH HIGH PULL-OUT STRENGTH

(30) Priorité: 23.06.2015 FR 1555739
(43) Date de publication de la demande: 02.05.2018
(73) Titulaire: A. RAYMOND et Cie, 38000 Grenoble (FR)
(72) Inventeur: DE MARCO, Sébastien, 38380 Saint Pierre de Chartreuse (FR); ALBARAN, Jean-François, 38760 Varces (FR)
(74) Mandataire: Prugneau, Philippe
(86) Numéro de dépôt international: PCT/FR2016/051504
(87) Numéro de publication internationale: WO 2016/207531

(56) Documents cités:
- EP-A1- 1 493 629
- WO-A1-96/35344
- DE-A1- 2 104 150
- FR-A1- 2 981 135

## Description

### Domaine technique

L'invention concerne un dispositif de fixation pour assembler deux pièces entre elles.

L'invention concerne plus particulièrement un dispositif de fixation pour assembler une première pièce, par exemple un panneau d'habillage d'une porte de véhicule automobile, à une seconde pièce, par exemple une paroi interne de porte du véhicule, comprenant un élément femelle avec une cavité axiale présentant une surface intérieure tubulaire et qui est destiné à être mis en prise sur la première pièce, un élément mâle en forme de tige s'insérant axialement dans la cavité et qui est destiné à être mis en prise sur la seconde pièce, et un moyen de retenue se présentant comme un cavalier en forme de U qui s'insère dans un logement de l'élément femelle, traversant transversalement la cavité axiale, pour venir pincer l'élément mâle et le verrouiller en position axiale dans la cavité de l'élément femelle.

### Technique antérieure

Dans l'industrie automobile de nombreuses techniques sont utilisées pour réaliser l'assemblage de deux pièces entre elles avec un dispositif de fixation, telles que le collage, le vissage ou l'utilisation d'agrafe.

Le dispositif de fixation doit être un organe de sécurité positionné à un emplacement prédéterminé pour éviter que dans un véhicule automobile, un panneau d'habillage de porte ne puisse se dissocier de la tôle métallique de la paroi de porte sous l'effet d'un choc latéral et être dangereusement expulsé dans l'habitacle du véhicule, notamment lorsqu'il est situé sur le trajet de déploiement d'un coussin gonflable de sécurité.

On connait par exemple un dispositif de fixation comprenant une vis dont le filet traverse le panneau d'habillage intérieur de porte et vient se solidariser avec une agrafe fixée à la paroi. La résistance à l'arrachement de la vis dans l'agrafe est souvent jugée faible, l'habillage de porte pouvant alors être expulsé dans l'habitacle du véhicule en cas de choc.

C'est pourquoi, les constructeurs automobiles cherchent à utiliser des dispositifs de fixation qui présentent une bonne résistance à l'arrachement en cas de choc latéral.

Les dispositifs de fixation à base d'agrafe et de clou répondent en partie à ces contraintes. Les deux éléments, agrafe et clou, sont intégrés à chacune des pièces à assembler, et l'assemblage peut se faire par glissement ou encliquetage du clou dans une cavité de l'agrafe. L'agrafe retenant le clou dans sa cavité présente actuellement la meilleure résistance à l'arrachement.

De tels dispositifs de fixations sont décrits dans les documents EP 1 360 420, US 6 254 302, WO 96/35344 A ou EP 1577567.

Le document FR 2 981 135 présente notamment un dispositif de fixation de ce type, avec un élément mâle à mettre en prise sur le panneau et un élément femelle à mettre en prise sur la paroi métallique de la porte, les deux éléments étant configurés pour que l'élément femelle puisse retenir l'élément mâle avec un moyen de retenue, sous forme d'une goupille, insérable dans l'élément femelle pour accrocher et retenir l'élément mâle.

Dans ce dispositif de fixation, la goupille est un fil de fer plié dont les extrémités forment le moyen de retenue logé dans l'élément femelle. Le retrait de l'élément mâle hors de la cavité est empêché par la venue en contact d'un épaulement de l'élément mâle avec des portions flexibles de la goupille. Néanmoins, en cas de choc latéral, la forte pression exercée par l'épaulement sur ces portions flexibles peut induire une torsion des portions flexibles entrainant une libération intempestive de l'élément mâle en dehors de l'élément femelle.

Une autre particularité de cette goupille est qu'elle est extractible de l'élément femelle par un organe de commande pour libérer l'élément mâle afin de pouvoir démonter le panneau de la paroi.

L'organe de commande est une boucle, formée par le fil plié cité ci-dessus, qui est en saillie de l'élément femelle. Dans ce dispositif, pour extraire la goupille de l'élément femelle, il faut engager un outil dans la boucle et tirer sur la goupille pour l'extraire de l'élément femelle.

Pour une nouvelle utilisation du système de fixation, le repositionnement de la goupille dans l'élément femelle est nécessaire avec une étape d'insertion pas très pratique de la goupille.

De plus, lorsque la goupille est libérée de l'élément femelle, elle peut être amenée à se perdre au cours des manipulations rendant alors le dispositif de fixation inutilisable.

Ainsi, pour le remplacement de l'un des éléments à fixer, les constructeurs automobiles sont amenés à développer des dispositifs de fixation facilement réutilisables, démontables et remontables, tout en étant imperdables.

C'est pourquoi, les constructeurs ont aussi tendance à rechercher des dispositifs de fixation démontables afin de changer facilement et rapidement, si nécessaire, les pièces assemblées par un tel dispositif.

### Exposé de l'invention

Le but de l'invention est de remédier à ces inconvénients tout en proposant un dispositif de fixation à haute résistance à l'arrachement, qui soit discret, facile et rapide d'utilisation.

Plus particulièrement, l'invention a pour objet un dispositif de fixation pour assembler une première pièce à une seconde pièce, comprenant un élément femelle avec une cavité qui s'étend suivant une direction axiale présentant une surface intérieure tubulaire et qui est destiné à être mis en prise sur la première pièce, un élément mâle en forme de tige s'insérant axialement dans la cavité et qui est destiné à être mis en prise sur la seconde pièce, et un moyen de retenue se présentant comme un cavalier en forme de U qui s'insère dans un logement de l'élément femelle, traversant transversalement la cavité, pour venir pincer l'élément mâle et le verrouiller en position axiale dans la cavité de l'élément femelle, caractérisé en ce que le moyen de retenue est doté de moyens anti-torsion du U en cas de traction de l'élément mâle hors de l'élément femelle, ces moyens anti-torsion comprenant au moins une première nervure qui saille selon la direction axiale depuis les branches du U à l'intérieur de la cavité et qui vient en butée contre la surface intérieure tubulaire de la cavité pour empêcher les branches du U de vriller lors de cette traction.

Le dispositif de fixation selon l'invention peut encore présenter les particularités suivantes :
- les moyens anti-torsion comprennent en outre au moins une seconde nervure sur les branches du U qui vient en butée dans une rainure prévue dans le logement de l'élément femelle pour empêcher les branches du U de vriller lors de cette traction ;
- il peut être prévu avantageusement deux premières nervures et deux secondes nervures réparties sur les deux branches du U du moyen de retenue ;
- les branches du U du moyen de retenue forment des dentelures qui se projettent vers l'intérieur du U pour pincer l'élément mâle quand il est inséré dans la cavité de l'élément femelle, la première nervure faisant saillie sensiblement perpendiculairement aux dentelures ;
- la première nervure saille depuis une première face du moyen de retenue et la seconde nervure saille depuis une seconde face du moyen de retenue qui est opposée à la première face du moyen de retenue ;
- le moyen de retenue se présente sous la forme d'un double cavalier en U avec un premier cavalier extérieur en forme de U et un second cavalier intérieur en forme de U, présentant une même base et qui sont emboités l'un dans l'autre dans un même plan ;
- le cavalier extérieur comprend des branches de U flexibles avec des lames flexibles anti-retour inclinées vers l'extérieur du U en direction de la base du U et qui viennent en butée contre des bossages prévus dans le logement quand le moyen de retenue est inséré dans l'élément femelle ;
- le moyen de retenue est agencé pour que dans une première position d'insertion dans l'élément femelle il retient l'élément mâle dans la cavité de l'élément femelle et que dans une seconde position d'insertion dans l'élément femelle plus enfoncée que la première position, il autorise la sortie de l'élément mâle hors de la cavité de l'élément femelle ;
- le cavalier intérieur comporte un fond du U avec des bords opposés rectilignes laissant passer l'élément mâle quand le moyen de retenue est dans la seconde position d'insertion dans l'élément femelle ;
- la première pièce est une tôle métallique interne de porte de véhicule automobile et la seconde pièce est un panneau de garniture interne de porte de véhicule automobile ;
- la première pièce est un mécanisme de lève vitre et la seconde pièce est une vitre de porte de véhicule automobile ;
- l'élément femelle, le moyen de retenue et l'élément mâle sont en matière plastique moulée.

Avec cet agencement selon l'invention, on obtient une fixation pour assembler deux pièces, telles qu'un panneau à une paroi, qui est détachable mais aussi très résistante à l'arrachement.

En cas de choc latéral sur une porte d'un véhicule automobile, l'élément mâle produit une traction sur l'élément femelle. La tige de l'élément mâle exerce alors une force axiale sur la branche du cavalier en U du moyen de retenue ce qui a tendance à faire monter la première nervure des moyens anti-torsion dans la cavité de l'élément femelle et ensuite la mettre en butée contre la surface intérieure de cette cavité ce qui empêche les branches du U de vriller et aussi que ces branches s'éloignent l'une de l'autre.

De plus, la seconde nervure sur l'autre face du U du moyen de retenue qui vient en butée dans la rainure du logement de l'élément femelle renforce la résistance à la torsion des branches du moyen de retenue du fait que cette nervure a tendance à s'arc-bouter sur la rainure et donc à maintenir à plat le U du moyen de retenue dans le logement de l'élément femelle.

En outre, les deux positions d'insertion du moyen de retenue dans l'élément femelle contribuent à rendre imperdable ce moyen de retenue même après une opération de démontage de la fixation.

Avec le dispositif selon l'invention, les constructeurs automobiles ont à leur disposition un dispositif de fixation d'un panneau à une paroi facile d'utilisation, démontable, imperdable et présentant de meilleures performances de résistance à l'arrachement en cas de choc latéral.

### Présentation sommaire des dessins

La présente invention sera mieux comprise et d'autres avantages apparaîtront à la lecture de la description qui suit et des dessins annexés dans lesquels :
- la figure 1 est une vue en perspective des trois éléments constitutifs du dispositif de fixation selon l'invention ;
- la figure 2 est une vue en perspective du dispositif de fixation selon l'invention avec le moyen de retenue inséré dans l'élément femelle selon une première position d'insertion pour recevoir et retenir l'élément mâle ;
- la figure 3 est une vue en perspective du dispositif de fixation selon l'invention avec l'élément mâle en prise dans l'élément femelle, l'élément mâle étant retenu dans l'élément femelle par le moyen de retenue inséré dans l'élément femelle selon une première position d'insertion ;
- la figure 4A est une vue en perspective de l'élément mâle du dispositif de fixation selon l'invention ;
- la figure 4B est une vue de profil de l'élément mâle du dispositif de fixation selon l'invention ;
- les figures 5A à 5C sont des vues en perspective de l'élément femelle respectivement vu de dessus, de coté et de dessous ;
- la figure 6A est une vue de dessus du moyen de retenue du dispositif de fixation selon l'invention ;
- la figure 6B est une vue en perspective du dessous du moyen de retenue du dispositif de fixation selon l'invention ;
- la figure 6C est une vue de profil du moyen de retenue du dispositif de fixation selon l'invention ;
- la figure 7 est une autre vue en perspective, vue de dessus, de l'élément femelle avec le moyen de retenue inséré dans l'élément femelle selon la première position d'insertion ;
- la figure 8 est une vue en coupe longitudinale de l'élément femelle avec le moyen de retenue inséré dans l'élément femelle selon la première position d'insertion ;
- la figure 9 est une vue en coupe axiale du dispositif de fixation avec l'élément mâle au contact du moyen de retenue inséré dans l'élément femelle selon une première position d'insertion ;
- la figure 10 est une vue en coupe axiale du dispositif de fixation avec l'élément mâle retenue dans la cavité de l'élément femelle par le moyen de retenue inséré dans l'élément femelle selon une première position d'insertion ;
- la figure 11 est une vue en coupe axiale du dispositif de fixation lors d'un choc, avec l'élément mâle en position de retenue par le moyen de retenue inséré dans l'élément femelle selon une première position d'insertion ;
- la figure 12 est une vue en perspective de dessus de l'élément femelle avec le moyen de retenue inséré dans l'élément femelle selon une seconde position d'insertion ;
- la figure 13 est une vue en coupe longitudinale de l'élément femelle avec le moyen de retenue inséré dans l'élément femelle selon la seconde position d'insertion.

### Description d'un mode de réalisation

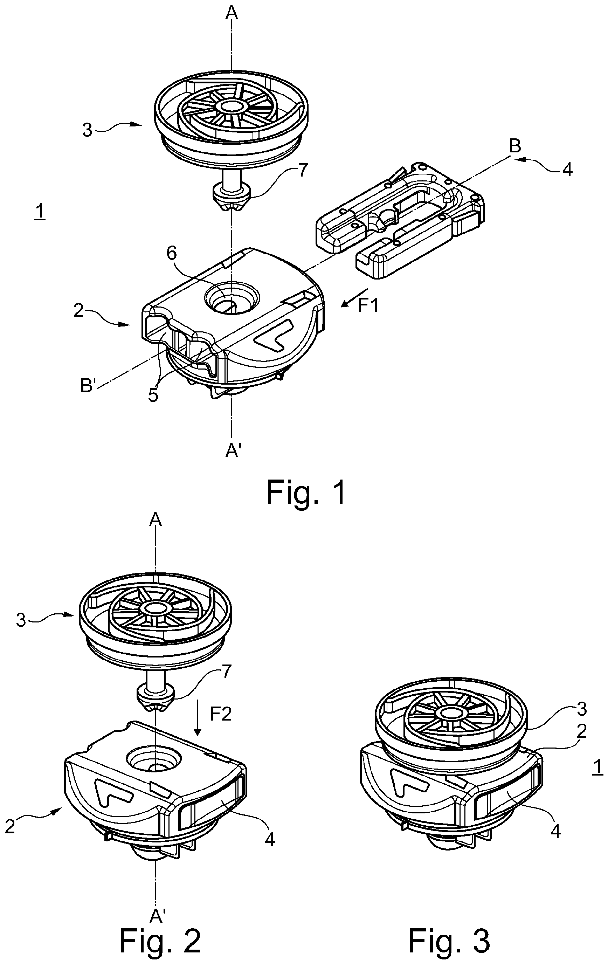

La figure 1 illustre un dispositif de fixation 1 selon l'invention adapté pour la fixation d'une première pièce, ici un panneau de garniture interne d'une porte de véhicule automobile, à une seconde pièce, ici une paroi en tôle métallique interne de la porte (non représentée sur les figures).

Le dispositif de fixation 1 comprend un élément femelle 2, ici une agrafe creuse traversée par une cavité 6 axiale cylindrique et prévue pour être mise en prise sur la paroi de porte, un élément mâle 3, ici un clou prévu pour être mis en prise sur le panneau de porte, et un moyen de retenue 4 ou verrou en forme de cavalier en U qui sert à verrouiller en position axiale l'élément mâle 3 dans l'élément femelle 2.

Plus particulièrement, le verrou 4 est agencé de telle sorte qu'il s'insère radialement (BB'), avec les extrémités des branches du U en avant, dans un logement 5 de l'agrafe 2 selon la flèche F1 transversal à la cavité cylindrique 6 de sorte que les branches du U se positionnent de part et d'autre de cette cavité 6 traversant l'agrafe 2.

Le clou 3 s'insère axialement (AA') dans la cavité 6 selon la flèche F2 comme illustré sur la Figure 2.

La figure 3 illustre le clou 3 en position de retenue dans l'agrafe 2 par le verrou 4.

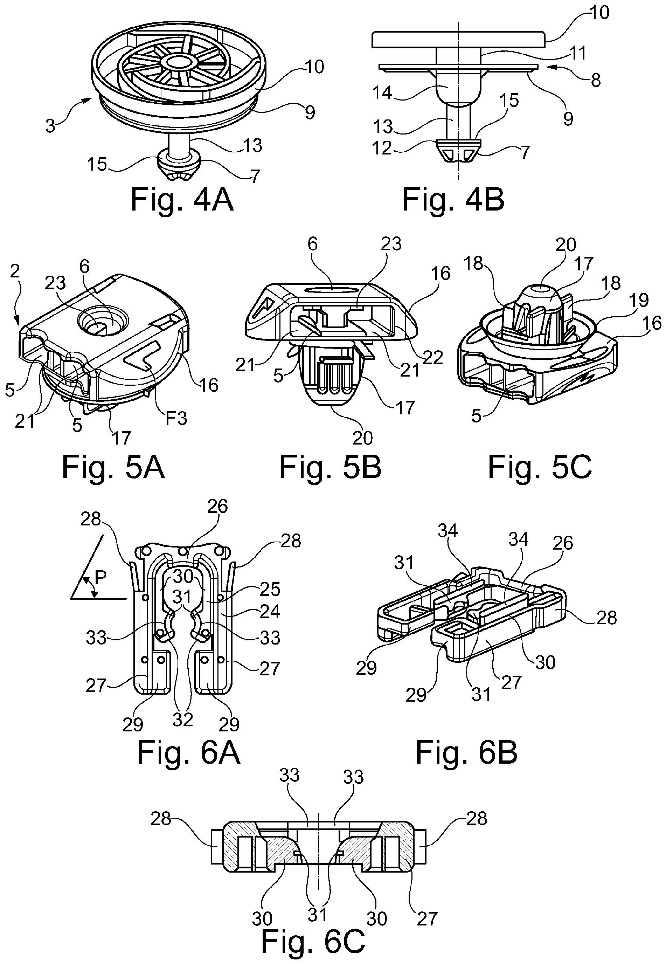

Le clou 3 en forme de tige est représenté sur les figures 4A et 4B. Il comporte globalement un pied 7 et une tête 8.

La tête 8 est composée d'une platine 9, d'une contre-platine 10 et d'une entretoise 11 reliant la platine 9 à la contre platine 10.

La contre-platine 10 comporte un flasque et des bras qui sont visibles sur la figure 4A.

La tête 8 du clou 3 sert de façon connue à la mise en prise du clou 3 au panneau de porte via le flasque et les bras.

Le pied 7 du clou 3 comporte une pointe 12 en forme d'ogive, un corps de tige 13 et un embasement 14.

L'embasement 14 est relié à la platine 9 sur la face opposée à l'entretoise 11.

Le corps de tige 13 présente un rétrécissement de section qui forme un épaulement 15 au-dessus de la pointe 12.

L'agrafe 2 est représentée selon différentes vues en perspectives sur les figures 5A à 5C.

L'agrafe 2 comporte un corps 16 creux duquel s'étend axialement à partir de sa face inférieure un culot 17 de forme globalement cylindrique avec des ailettes 18 s'étendant radialement à partir du cylindre du culot 17.

Le culot 17 sert de façon connue à mettre en prise l'agrafe 2 sur la paroi, par insertion axiale du culot 17 à travers un orifice de la paroi.

Les ailettes 18 servent de détrompeur pour l'insertion du culot 17 à travers l'orifice, mais aussi de moyen d'accroché de l'agrafe 2 à la paroi suite à une rotation de l'agrafe 2 par rapport à l'orifice.

Ici, l'étanchéité à la poussière et à l'eau entre l'agrafe 2 et la paroi est assurée par une jupe 19 sous forme d'un parapluie souple agencée entre le corps 16 et le culot 17.

Sur la figure 5A, l'entrée de la cavité 6 est visible sur la face supérieure du corps 16 de l'agrafe 2.

Cette cavité 6 cylindrique s'étend axialement à travers le corps 16 de l'agrafe 2 jusqu'à une paroi 20 de fond du culot 17 cylindrique de l'agrafe 2. La cavité 6 peut aussi ne pas avoir de fond et donc être complètement traversante.

Cette cavité 6 présente un diamètre légèrement plus grand que le contour externe de l'épaulement 15 du pied 7 du clou 3.

Comme cela est visible sur la figure 5B, le logement 5 traverse radialement tout le corps 16 de l'agrafe 2 transversalement à la cavité 6.

Ce logement 5 est ici à section rectangulaire et présente des rainures 21 longitudinales courant sur toute la longueur de sa face inférieure.

L'insertion du verrou 4 dans le logement 5 de l'agrafe 2 se fait par une entrée sur l'un des cotés latéraux du logement 5.

Le sens d'insertion est matérialisé par une flèche d'orientation F3 visible notamment sur la figure 5A, sur le corps 16 de l'agrafe 2.

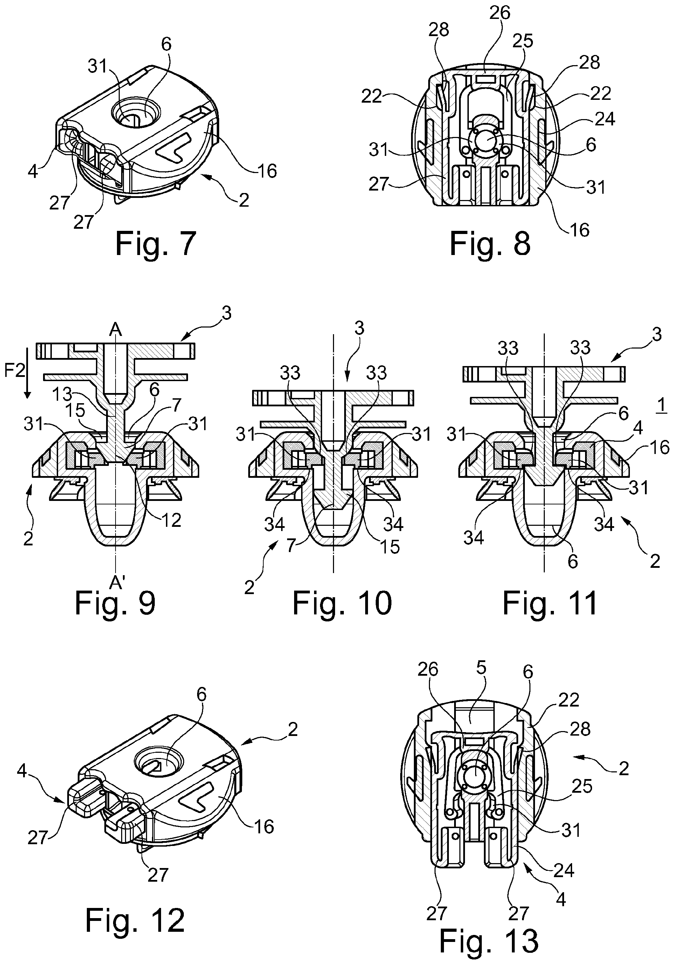

Du coté de l'entrée d'insertion du verrou 4 dans le logement 5, le logement 5 présente sur ses parois des bossages 22 pour retenir le verrou 4 dans l'agrafe 2. Les bossages 22 seront mieux visibles sur les figures 8 et 13.

On peut remarquer sur les figures que la cavité 6 communique par des ouvertures radiales 23 symétriques avec le logement 5.

Le verrou 4 est notamment illustré sur les figures 6A à 6C. Ici, le verrou 4 est un double cavalier, avec un premier cavalier dit extérieur 24 en forme de U et un second cavalier dit intérieur 25 en forme de U, présentant une même base 26 et emboités l'un dans l'autre dans un même plan P.

Le cavalier extérieur 24 a une épaisseur correspondante sensiblement à la section rectangulaire du logement 5 de l'agrafe 2 et des branches 27 flexibles de longueur correspondante à celles des rainures 21 du corps 16 de l'agrafe 2.

Les branches 27 présentent du coté de la base 26 du U des lames flexibles 28 qui en position déployée sont inclinées vers l'extérieur en direction de la base 26 du U.

Aux extrémités de chacune des branches 27 du cavalier extérieur 24, du coté intérieur au U, sont présents des ergots 29 agencés dans le plan du cavalier.

Le cavalier intérieur 25 présente des branches 30 flexibles. Les branches 30 présentent chacune une section de longueur rectiligne du coté prolongeant la base 26 et une section de longueur incurvée avec une dentelure 31, de sorte que les dentelures 31 sur chacune des branches 30 se font face.

Les dentelures 31 sont sous forme d'arc de cercle pour former des mâchoires qui sont inclinées de sorte à s'élargir axialement de la face supérieure vers la face inférieure du verrou 4.

Les dentelures 31 en vis-à-vis présentent un diamètre inférieur au contour externe de l'épaulement 15 du pied 7 du clou 3.

Les extrémités des branches 30 du cavalier intérieur 25 présentent chacune une section 32 inclinée vers l'intérieur du U.

Dans l'exemple, sur la face supérieure des dentelures 31 de chaque branche, une fine nervure 33 en arc de cercle fait saillie axialement et sur la face inférieure du verrou 4 illustrée figure 6B, on voit sur chacune des branches 30 du cavalier intérieur 25 une nervure 34 longitudinale.

Pour un pré-montage du verrou 4 dans l'agrafe 2 du dispositif de fixation 1, les extrémités des branches 27 du cavalier extérieur 24 du verrou 4 sont introduites en premier dans le logement 5 du corps 16 selon la flèche F1 de la figure 1 du cotée entrée d'insertion.

Le verrou 4 est alors poussé dans le logement 5 par enfoncement radial jusqu'à se trouver dans une première position d'insertion illustrée sur les figures 7 et 8 dans laquelle les extrémités des branches 27 du cavalier extérieur 24 se trouvent en vis-à-vis du corps 16 du coté opposé du coté d'insertion du verrou 4 dans le logement 5.

Dans cette première position d'insertion, les lames 28 flexibles du verrou 4 se retrouvent en position déployée en butée avec les bossages 22 du corps 16 de l'agrafe 2 de sorte à empêcher le retrait du verrou 4 du logement 5 de l'agrafe 2.

Au cours du mouvement d'enfoncement du verrou 4 dans le corps 16 de l'agrafe 2, les sections inclinées 32 des extrémités des branches 30 du verrou 4 ont rencontré une cloison amont de la cavité 6 de l'agrafe 2.

La forme inclinée des sections 32 a aidé le verrou 4 à se déformer élastiquement.

Les branches 30 du cavalier intérieur 25 se sont écartées puis se sont resserrées au niveau des ouvertures 23 de sorte que le verrou 4 se trouve alors dans la première position d'insertion dans l'agrafe 2, les dentelures 31 du verrou 4 se retrouvant en vis-à-vis de la cavité 6 de l'agrafe 2 et les dentelures formant mâchoires faisant saillie dans la cavité 6 à travers les ouvertures 23 radiales de la cavité 6.

Il est à noter que les nervures 33 en saillie des dentelures 31 ne gênent pas l'insertion du verrou 4 dans l'agrafe 2, car la hauteur totale d'une dentelure 31 avec sa nervure 33 est légèrement inférieure à la hauteur des ouvertures 23 radiales de la cavité 6.

Après avoir inséré le verrou 4 dans l'agrafe 2 en position de pré-montage, correspondant aussi à la première position du verrou 4 dans l'agrafe 2, il est possible de procéder à l'assemblage du panneau sur la paroi en dirigeant la pointe 12 du pied 7 du clou 3 vers le cavité 6 de l'agrafe 2 et en l'introduisant selon la flèche F2 de la figure 2. On pousse alors le panneau vers la paroi, la pointe 12 en forme d'ogive venant au contact des dentelures 31 inclinées en saillies dans la cavité 6 comme illustré sur la figure 9.

Sous l'effet de la pression de la pointe 12 sur les dentelures 31, les branches 30 s'écartent l'une de l'autre, puis lorsque la pointe 12 a franchi les dentelures 31, le pied 7 du clou 3 ayant été mordu, les branches 30 se resserrent sur la tige 13 et viennent la pincer.

Le retrait du pied 7 hors de la cavité 6 est empêché par la butée de l'épaulement 15 avec les dentelures 31 lorsque le clou 3 est tiré axialement en dehors de l'agrafe 2.

On notera que la forme de la pointe 12 du pied 7 et l'inclinaison des dentelures 31 permet au pied 7 de s'insérer dans la cavité 6 avec une tolérance de positionnement relativement élevée entre un panneau et une paroi de porte de véhicule.

Comme illustré dans la figure 10, la cavité 6 est configurée pour que le pied 7 puisse y être pleinement enfoncé.

Ainsi, entre la position où le pied 7 est pleinement enfoncé dans la cavité 6 et la position où il n'est plus possible de faire sortir le pied 7 de la cavité 6, le panneau peut s'écarter de la paroi d'une distance de l'ordre de 5mm par exemple.

Ici le dispositif de fixation 1 selon l'invention est un organe de sécurité positionné à un emplacement prédéterminé pour éviter qu'un panneau ne puisse se dissocier d'une paroi sous l'effet d'un choc, notamment lorsqu'il est situé sur le trajet de déploiement d'un coussin gonflable de sécurité.

Ici le dispositif de fixation 1 est capable de résister à un effort d'arrachement supérieur à 100daN, ce qui est au delà des valeurs connues des dispositifs de fixation de l'art antérieur.

Cette valeur de résistance à un effort d'arrachement est obtenue grâce à une coopération d'éléments du verrou 4 et de l'agrafe 2.

Dans un dispositif de fixation de l'art antérieur, si le clou 3 est amené à être tiré vers la sortie de la cavité 6, comme lors d'un choc latéral par exemple, l'épaulement 15 du pied 7 se trouve alors en pression sur la face inférieure des dentelures 31 du verrou 4. Sous l'effet de cette force axiale, les dentelures 31 inclinées peuvent être sollicitées en torsion et avoir tendance à reculer radialement en arrière des ouvertures 23 radiales et aussi peuvent vriller et ne plus retenir le clou 3 dans la cavité 6 en cédant le passage au pied 7.

Selon l'invention et comme illustré sur la figure 11, en cas de choc latéral, lorsque l'épaulement 15 exerce une force axiale sur la face inférieure des dentelures 31 du verrou 4, les dentelures 31 des branches flexibles 30 sont tirées axialement vers le haut.

La fine nervure 33 en saillie sur chaque face supérieure des dentelures 31 vient à l'intérieur de la cavité 6 en butée avec la surface tubulaire intérieure de la cavité 6.

Les nervures 33 servent donc de moyen anti-torsion du verrou en U car elles permettent de retenir chaque branche du U à plat dans le logement 5 en l'empêchant de vriller.

En plus les nervures 34 inférieures des branches 30 du cavalier intérieur 25 du verrou 4 sont bloquées dans les rainures 21 du logement 5 du corps 16 de l'agrafe 2 ce qui les empêchent de vriller et ce qui contribue à bien maintenir à plat le verrou en U dans le logement 5.

Les nervures 34 sur les branches 30 du cavalier intérieur 25 du verrou, contribuent aussi à assurer une bonne rigidité des branches 30 du verrou.

La possibilité susmentionnée d'écarter le panneau de la paroi avant que l'épaulement 15 ne vienne contre la face inférieure des dentelures 31 sert à permettre de libérer le clou 3 de l'agrafe 2 pour rendre possible le démontage du panneau vis-à-vis de la paroi.

En effet, l'écart existant entre le panneau et la paroi permet alors dans un mode de réalisation spécifique d'insérer un outil pour appuyer sur le verrou 4 du coté de la base 26 commune afin de l'enfoncer plus profondément, toujours selon la flèche F1 dans le logement 5 jusqu'à ce que le verrou 4 se trouve dans une seconde position d'insertion dans l'agrafe 2. Dans cette seconde position d'insertion, les dentelures 31 ne sont plus en vis-à-vis de la cavité 6 de l'agrafe 2 et ne peuvent plus retenir le pied 7 du clou 3 comme illustré sur les figures 12 et 13.

En effet, au cours de ce mouvement d'enfoncement du verrou 4 dans le logement 5 de l'agrafe 2, les branches 30 flexibles du cavalier intérieur 25 du verrou 4 se déforment de sorte que les dentelures 31 s'écartent au contact de la cloison avale de la cavité 6, le verrou 4 s'enfonçant jusqu'à ce que la base 26 commune se trouve en butée d'une cloison amont de cavité 6, limitant ainsi la course du verrou 4 dans l'agrafe 2.

Dans cette seconde position d'insertion, les extrémités des branches 27 du cavalier extérieur 24 du verrou 4 dépassent du logement 5 de l'agrafe 2.

Les lames 28 flexibles du verrou 4 qui se sont rétractées au cours de l'enfoncement du verrou 4 dans l'agrafe 2, se retrouvent alors en butée des parois du logement 5 de l'agrafe 2.

Dans cette seconde position d'insertion, c'est le fond rectiligne entre la base 26 du U et les dentelures 31 du cavalier intérieur 25 du verrou 4 qui se trouve en vis-à-vis de la cavité 6.

Dans cette seconde position d'insertion, aucun obstacle ne se trouve en vis-à-vis de la cavité 6, le clou 3 peut être extrait sans effort de la cavité 6 de l'agrafe 2.

Dans ce mode de réalisation décrit ci-dessus, le verrou 4 est déjà enfoncé dans l'agrafe 2 en position de pré-montage (ou première position du verrou 4 dans l'agrafe 2) avant que l'agrafe 2 ne soit mise en prise avec la paroi mais l'agrafe 2 seule, c'est-à-dire sans verrou 4 inséré dans son corps 16, pourrait être mise en prise sur la paroi avant l'insertion du verrou 4 dans le logement 5.

Selon l'invention, à partir de la seconde position d'insertion du verrou 4 dans l'agrafe 2, une fois le clou 3 retiré de l'agrafe 2, en appuyant radialement sur les extrémités des branches 27 du cavalier extérieur 24 du verrou 4 en saillie du logement 5 de l'agrafe 2 de sorte à les renfoncer dans le logement 5, le verrou 4 se remet dans l'agrafe 2 dans la première position d'insertion.

Les lames 28 flexibles du verrou 4 se retrouvent à nouveau en position déployée en butée avec les bossages 22 du corps 16 de l'agrafe 2 de sorte à empêcher le retrait du verrou 4 du logement 5 de l'agrafe 2.

Le verrou 4 dans l'agrafe 2 est alors à nouveau en position pour recevoir, mordre et retenir un clou 3 dans l'agrafe 2.

Le montage d'un nouveau panneau à la paroi peut être par conséquent très rapide.

Il est entendu que dans la description ci-dessus, l'agrafe 2 pourrait être mise en prise avec le panneau tandis que le clou 3 pourrait être mis en prise avec la paroi.

Il est aussi entendu que le dispositif de fixation selon l'invention pourrait être utilisé pour fixer d'autres types de pièces, comme par exemple pour fixer un mécanisme de lève vitre à une vitre du véhicule automobile.

Les différents éléments du dispositif de fixation selon l'invention à savoir l'agrafe 2, le clou 3 et le verrou 4, peuvent être réalisés complètement par moulage de matière plastique ou par injection de matière plastique. Un tel dispositif de fixation peut être fabriqué à faible coût.

Ces éléments pourraient aussi être fabriqués par addition de matière dans une imprimante 3D si par exemple il s'agissait d'une fabrication en petites séries.

## Revendications

1. Dispositif de fixation (1) pour assembler une première pièce à une seconde pièce, comprenant un élément femelle (2) avec une cavité (6) qui s'étend suivant une direction axiale présentant une surface intérieure tubulaire et qui est destiné à être mis en prise sur ladite première pièce, un élément mâle (3) en forme de tige s'insérant axialement dans ladite cavité (6) et qui est destiné à être mis en prise sur ladite seconde pièce, et un moyen de retenue (4) se présentant comme un cavalier en forme de U qui s'insère dans un logement (5) dudit élément femelle (2), traversant transversalement ladite cavité (6) axiale, pour venir pincer ledit élément mâle (3) et le verrouiller en position axiale dans ladite cavité (6) dudit élément femelle (2), **caractérisé en ce que** ledit moyen de retenue (4) est doté de moyens anti-torsion du U en cas de traction dudit élément mâle (3) hors dudit élément femelle (2), ces moyens anti-torsion comprenant au moins une première nervure (33) qui saille selon ladite direction axiale depuis lesdites branches dudit U à l'intérieur de ladite cavité (6) et qui vient en butée contre ladite surface intérieure tubulaire de ladite cavité (6) pour empêcher lesdites branches dudit U de vriller lors de cette traction.

2. Dispositif de fixation selon la revendication 1, **caractérisé en ce que** lesdits moyens anti-torsion comprennent en outre au moins une seconde nervure (34) sur lesdites branches dudit U qui vient en butée dans une rainure (21) prévue dans ledit logement (5) dudit élément femelle (2) pour empêcher lesdites branches dudit U de vriller lors de cette traction.

3. Dispositif de fixation selon la revendication 2, **caractérisé en ce que** lesdits moyens anti-torsion comprennent deux premières nervures (33) et deux secondes nervures (34) réparties sur lesdites deux branches dudit U dudit moyen de retenue (4).

4. Dispositif de fixation selon la revendication 1, **caractérisé en ce que** lesdites branches dudit U dudit moyen de retenue (4) forment des dentelures (31) qui se projettent vers l'intérieur dudit U pour pincer ledit élément mâle (3) quand il est inséré dans ladite cavité (6) dudit élément femelle (2), ladite première nervure faisant saillie sensiblement perpendiculairement auxdites dentelures (31).

5. Dispositif de fixation selon la revendication 2, **caractérisé en ce que** ladite première nervure (33) saille depuis une première face dudit moyen de retenue (4) et ladite seconde nervure (34) saille depuis une seconde face dudit moyen de retenue (4) qui est opposée à ladite première face dudit moyen de retenue (4).

6. Dispositif de fixation selon l'une des revendications précédentes, **caractérisé en ce que** ledit moyen de retenue (4) se présente sous la forme d'un double cavalier en U avec un premier cavalier extérieur (24) en forme de U et un second cavalier intérieur (25) en forme de U, présentant une même base (26) et qui sont emboités l'un dans l'autre dans un même plan (P).

7. Dispositif de fixation selon la revendication 6, **caractérisé en ce que** ledit cavalier extérieur (24) comprend des branches (27) de U flexibles avec des lames (28) flexibles anti-retour inclinées vers l'extérieur du U en direction de ladite base (26) du U et qui viennent en butée contre des bossages (22) prévus dans ledit logement (5) quand ledit moyen de retenue (4) est inséré dans ledit élément femelle (2).

8. Dispositif de fixation selon la revendication 1, **caractérisé en ce que** ledit moyen de retenue (4) est agencé pour que dans une première position d'insertion dans ledit élément femelle (2) il retient ledit élément mâle (3) dans ladite cavité (6) dudit élément femelle (2) et que dans une seconde position d'insertion dans ledit élément femelle (2) plus enfoncée que ladite première position, il autorise la sortie dudit élément mâle (3) hors de ladite cavité (6) dudit élément femelle (2).

9. Dispositif de fixation selon la revendication 6, **caractérisé en ce que** ledit cavalier intérieur (25) comporte un fond du U avec des bords opposés rectilignes laissant passer ledit élément mâle (3) quand ledit moyen de retenue (4) est dans ladite seconde position d'insertion dans ledit élément femelle (2).

10. Dispositif de fixation selon la revendication 1, **caractérisé en ce que** ladite première pièce est une tôle métallique interne de porte de véhicule automobile et ladite seconde pièce est un panneau de garniture interne de porte de véhicule automobile.

11. Dispositif de fixation selon la revendication 1, **caractérisé en ce que** ladite première pièce est un mécanisme de lève vitre et ladite seconde pièce est une vitre de porte de véhicule automobile.

12. Dispositif de fixation selon l'une des revendications précédentes, **caractérisé en ce que** ledit élément femelle (2), ledit moyen de retenue (4) et ledit élément mâle (3) sont en matière plastique moulée.

## Patentansprüche

1. Befestigungsvorrichtung (1) zum Verbinden eines ersten Teils mit einem zweiten Teil, umfassend ein weibliches Element (2) mit einer Kavität (6), die sich gemäß einer axialen Richtung erstreckt und eine rohrförmige Innenfläche aufweist und welches dazu bestimmt ist, mit dem ersten Teil in Eingriff zu gelangen, ein männliches Element (3) in Form eines Stabes, der sich axial in die Kavität (6) einfügt und welches dazu bestimmt ist, mit dem zweiten Teil in Eingriff zu gelangen, und ein Haltemittel (4), das als U-förmiger Reiter in eine Aufnahme (5) des weiblichen Element (2) einsetzbar ist, die axiale Kavität (6) quer durchsetzend, um das männliche Element (3) zu fassen und es in axialer Position in der Kavität (6) des weiblichen Elements (2) zu verriegeln, **dadurch gekennzeichnet,**
**dass** das Haltemittel (4) mit torsionsverhindernden Mitteln des U im Fall eines Ziehens des männlichen Elements (3) aus dem weiblichen Element (2) ausgestattet ist, wobei diese torsionsverhindernden Mittel wenigstens einen ersten Steg (33), der gemäß der axialen Richtung von den Schenkeln des U in dem Inneren der Kavität (6) vorsteht und gegen die rohrförmige Innenfläche der Kavität (6) anliegt, um die Schenkel des U daran zu hindern, während dieses Ziehens zu verdrehen.

2. Befestigungsvorrichtung nach Anspruch 1, **dadurch gekennzeichnet, dass** die torsionsverhindernden Mittel ferner wenigstens einen zweiten Steg (34) auf den Schenkeln des U umfassen, der in einer in der Aufnahme (5) des weilblichen Element (2) vorgesehenen Nut (21) in Anlage gelangt, um die Schenkel des U an einem Verdrehen während des Ziehens zu hindern.

3. Befestigungsvorrichtung nach Anspruch 2, **dadurch gekennzeichnet, dass** die torsionsverhindernden Mittel zwei erste Stege (33) und zwei zweite Stege (34) umfassen, die auf den zwei Schenkeln des U des Haltemittels (4) verteilt sind.

4. Befestigungsvorrichtung nach Anspruch 1, **dadurch gekennzeichnet, dass** die Schenkel des U des Haltemittels (4) Verzahnungen (31) bilden, die zum Inneren des U vorstehen zum Fassen des männlichen Elements (3), wenn es in die Kavität (6) des weiblichen Elements (2) eingesetzt ist, wobei der erste Steg im Wesentlichen senkrecht zu den Verzahnungen (31) vorsteht.

5. Befestigungsvorrichtung nach Anspruch 2, **dadurch gekennzeichnet, dass** der erste Steg (33) von einer ersten Seite des Haltemittels (4) vorsteht und dass der zweite Steg (34) von einer der ersten Seite des Haltemittels (4) abgekehrten zweiten Seite des Haltemittels (4) vorsteht.

6. Befestigungsvorrichtung nach einem der vorhergehenden Ansprüche, **dadurch gekennzeichnet, dass** das Haltemittel (4) in Gestalt eines doppelten Reiters in U-Form mit einem ersten äußeren Reiter (24) in U-Form und einem zweiten inneren Reiter (25) in U-Form vorgesehen ist, die eine selbe Basis (26) aufweisen und die einer in dem anderen in einer selben Ebene (P) ineinandergefügt sind.

7. Befestigungsvorrichtung nach Anspruch 6, **dadurch gekennzeichnet, dass** der äußere Reiter (24) flexible U-Schenkel (27) mit flexiblen rückschlaghemmenden Lamellen (28), die nach Außen des U in Richtung der Basis (26) des U geneigt sind und die gegen in der Aufnahme (5) vorgesehene Buckel (22) in Anlage gelangen, wenn das Haltemittel (4) in das weibliche Element (2) eingeführt ist.

8. Befestigungsvorrichtung nach Anspruch 1, **dadurch gekennzeichnet, dass** das Haltemittel (4) ausgebildet ist, um in einer ersten Einsetzposition in dem weiblichen Element (2) das männliche Element (3) in der Kavität (6) des weiblichen Elements (2) zu halten, und dass in einer zweiten Einsetzposition in dem weiblichen Element (2), die tiefer als die erste Position ist, es das Austreten des männlichen Elements (3) aus der Kavität (6) des weiblichen Elements (2) zulässt.

9. Befestigungsvorrichtung nach Anspruch 6, **dadurch gekennzeichnet, dass** der innere Reiter (25) einen Grund des U mit gegenüberliegenden gradlinigen Rändern umfasst, die das männliche Element (3) passieren lassen, wenn das Halteelement (4) in der zweiten Einsetzposition in dem weiblichen Element (2) ist.

10. Befestigungsvorrichtung nach Anspruch 1, **dadurch gekennzeichnet, dass** das erste Teil ein inneres metallisches Blechteil eines automobilen Fahrzeugs und das zweite Teil eine Innenauskleidung der Tür des automobilen Fahrzeugs ist.

11. Befestigungsvorrichtung nach Anspruch 1, **dadurch gekennzeichnet, dass** das erste Teil ein Fensterhebemechanismus und das zweite Teil ein Fenster eines automobilen Fahrzeugs ist.

12. Befestigungsvorrichtung nach einem der vorhergehenden Ansprüche, **dadurch gekennzeichnet, dass** das weibliche Element (2), das Haltemittel (4) und das männliche Element (3) aus geformten Kunststoffmaterial sind.

## Claims

1. A fastener device (1) for assembling a first part to a second part, the fastener device comprising: a female element (2) that has a cavity (6) extending in an axial direction presenting a tubular inside surface and that is for engaging on said first part, a male element (3) that is in the shape of a rod for inserting axially into said cavity (6) and that is for engaging on said second part, and retention means (4) in the form of a U-shaped clamp that is inserted into a housing (5) of said female element (2), passing transversely through said cavity (6), so as to pinch said male element (3) and lock it axially in said cavity (6) of said female element (2), the fastener device being **characterized in that** said retention means (4) are provided with anti-twisting means that prevent the U-shape from twisting in the event of said male element (3) being pulled outwards relative to said female element (2), the anti-twisting means comprising at least one first rib (33) that projects in said axial direction from said branch of said U-shape inside said cavity (6) and that comes into abutment against said tubular inside surface of said cavity (6), so as to prevent said branches of said U-shape from twisting during such pulling.

2. A fastener device according to claim 1, **characterized in that** said anti-twisting means further comprise at least one second rib (34) on said branches of said U-shape, which second rib comes into abutment in a groove (21) that is provided in said housing (5) of said female element (2), so as to prevent said branches of said U-shape from twisting during such pulling.

3. A fastener device according to claim 2, **characterized in that** said anti-twisting means comprise two first ribs (33) and two second ribs (34) distributed on said two branches of said U-shape of said retention means (4).

4. A fastener device according to claim 1, **characterized in that** said branches of said U-shape of said retention means (4) form serrations (31) that project towards the inside of said U-shape so as to pinch said male element (3) when it is inserted into said cavity (6) of said female element (2), said first rib projecting substantially perpendicularly to said serrations (31).

5. A fastener device according to claim 2, **characterized in that** said first rib (33) projects from a first face of said retention means (4), and said second rib (34) projects from a second face of said retention means (4) that is remote from said first face of said retention means (4).

6. A fastener device according to any preceding claim, **characterized in that** said retention means (4) are in the form of two U-shaped clamps with an outer first clamp (24) and an inner second clamp (25), which first and second clamps present a common base (26) and are interfitted one inside the other in a common plane (P).

7. A fastener device according to claim 6, **characterized in that** said outer clamp (24) includes flexible U-shaped branches (27) with flexible anti-return blades (28) that slope outwards from the U-shape towards said base (26) of the U-shape, and that come into abutment against recesses (22), provided in said housing (5), when said retention means (4) are inserted into said female element (2).

8. A fastener device according to claim 1, **characterized in that** said retention means (4) is arranged so that in a first insertion position in said female element (2) it retains said male element (3) in said cavity (6) of said female element, and so that in a second insertion position in said female element (2), which second position is driven further in than said first position, it allows said male element (3) to be removed from said cavity (6) of said female element (2).

9. A fastener device according to claim 6, **characterized in that** said U-shaped inner clamp (25) includes a base of the U-shape with opposite straight edge segments that allow said male element (3) to pass when said retention means (4) are in said second insertion position in said female element (2).

10. A fastener device according to claim 1, **characterized in that** said first part is sheet metal inside a motor vehicle door, and said second part is an internal trim panel of a motor vehicle door.

11. A fastener device according to claim 1, **characterized in that** said first part is a window lift mechanism, and said second part is a window of a motor vehicle door.

12. A fastener device according to any preceding claim, **characterized in that** said female element (2), said retention means (4), and said male element (3) are made of molded plastics material.
